# EUROPEAN PATENT SPECIFICATION

(11) **EP 4 210 141 B1**
(45) Date of publication and mention of the grant of the patent: **18.06.2025**
(21) Application number: 23150394.7
(22) Date of filing: 05.01.2023
(51) Int. Cl.: H01M 10/052, H01M 50/209, H01M 50/507, H01M 50/526

(54) **BATTERY PACK**
BATTERIEPACK
BLOC-BATTERIE

(30) Priority: 05.01.2022 KR 20220001634
(43) Date of publication of application: 12.07.2023
(73) Proprietor: Samsung SDI Co., Ltd., Yongin-si, Gyeonggi-do 17084 (KR)
(72) Inventor: Ahn, Janggun, 17084 Yongin-si, Gyeonggi-do (KR)
(74) Representative: Gulde & Partner

(56) References cited:
- WO-A1-2014/024448
- JP-A- 2020 017 396

## Description

### BACKGROUND

### Field

One or more embodiments relate to a battery pack.

### Description of the Related Art

In general, secondary batteries are batteries that can be charged and discharged, unlike primary batteries that cannot be charged. The secondary batteries are used as energy sources for mobile devices, electric vehicles, hybrid vehicles, electric bicycles, uninterruptible power supplies, etc. Also, depending on the types of external devices in which the secondary batteries are employed, the secondary batteries may be used in the form of a single battery cell or may be used in the form of a battery pack in which a plurality of battery cells are connected and bound as a unit.

Small mobile devices, such as cell phones, can be operated for a certain period of time by the output and capacity of a single battery, but electric vehicles and hybrid vehicles, which consume a lot of power, require long-term operation and high-power operation. Thus, in the latter case, the battery pack is preferred due to the limitations of output and capacity, and the battery pack can increase the output voltage or output current according to the number of battery cells embedded therein.

In such a battery pack, a protection circuit module can be provided to detect an abnormal operation of a battery cell and perform a protection operation. The protection circuit module collects state information of battery cells, such as voltage and temperature of the battery cells, and controls charging and discharging operations of the battery cells.

Document JP 2020 017396 A discloses a battery pack including a plurality of cells and a sheet-like laminate bus bar including resin and conductive layers. The conductive layers of the bus bar may have a structure including a base metal layer and a plating layer formed on the surface thereof.

Document WO 2014/024448 A1 discloses a battery pack including a plurality of battery cells having electrode terminals made of different metals connected by a bus bar of a metal plate. The bus bar is a metal clad material formed by joining a first metal plate made of an aluminium plate and a second metal plate made of a different metal from the first metal plate.

### SUMMARY

One or more embodiments may include a bus bar which has an improved structure to ensure durability of the bus bar while forming a strong homogeneous metal bond with an object to be connected.

The invention is set out in the appended set of claims. Additional aspects will be set forth in part in the description which follows and, in part, will be apparent from the description, or may be learned by practice of the presented embodiments of the disclosure.

According to one or more embodiments, a battery pack includes a plurality of battery cells and a bus bar electrically connected to the plurality of battery cells, wherein the bus bar includes a single-layer portion and a multi-layer portion which have different numbers of stacks in the thickness direction, wherein the single-layer portion includes a first material layer, and the multi-layer portion includes a first material layer continuously connected from the first material layer of the single-layer portion and a second material layer formed on at least one of a surface or a rear surface of the first material layer. In other words, the first material layer of the single-layer portion and the first material layer of the multi-layer portion are integrally formed.

The bus bar is configured such that at least one or both of the single-layer portion or the multi-layer portion is located to correspond to at least one of, two of or all of
i. a first connection position for establishing a connection with an electrode of each of the battery cells,
ii. a second connection position for establishing a connection with a circuit board disposed above the electrode of the battery cell, or
iii. a third connection position for establishing a connection with a connecting member extending out of the battery cell.

The single-layer portion is located at the first connection position of the bus bar, and the multi-layer portion is located at the second and third connection positions of the bus bar.

For example, a first connection portion of the bus bar, which faces the electrode of the battery cell at the first connection position, may have a first connection surface, which faces the electrode of the battery cell, and a first rear surface, which is on the opposite side from the electrode of the battery cell, wherein each of the first connection surface and the first rear surface includes the first material layer.

For example, the first connection surface may be entirely made of the first material layer, and the first rear surface may be partially made of the first material layer.

For example, a central region of the first rear surface, which corresponds to the first connection position, may include the first material layer, and an edge region of the first rear surface, which surrounds the central region, may include the second material layer.

For example, the central region may be provided as a surface of the single-layer portion, and the edge region may be provided as a surface of the multi-layer portion.

For example, a second connection portion of the bus bar, which faces the circuit board at the second connection position, may have a second connection surface, which faces the circuit board, and a second rear surface, which is on the opposite side from the circuit board, wherein the second connection surface includes the second material layer, and the second rear surface includes the first material layer.

For example, the second connection surface and the second rear surface may be provided as surfaces of the multi-layer portion which are opposite to each other.

For example, a third connection portion of the bus bar, which faces the connecting member at the third connection position, may have a third connection surface, which faces the connecting member, and a third rear surface, which is on the opposite side from the connecting member, wherein the third connection surface includes the second material layer, and the third rear surface includes the first material layer.

For example, the third connection surface may be entirely made of the second material layer, and the third rear surface may be entirely made of the first material layer.

For example, the third connection surface and the third rear surface may be provided as surfaces of the multi-layer portion which are opposite to each other.

For example, the first connection position and the third connection position may be formed in a main body of the bus bar, and the second connection position may be formed in an end of a measurement terminal that protrudes from the main body of the bus bar to face the circuit board. For example, the measurement terminal may include the multi-layer portion in which the second material layer is formed on the first material layer.

For example, the bus bar may include a first bus bar that includes a main body formed at the first connection position and a measurement terminal formed at the second connection position, and a second bus bar that includes a main body formed at the first and third connection positions and a measurement terminal formed at the second connection position. In particular, the battery pack may comprise at least two bus bars, wherein a first bus bar of the at least two bus bars comprises a main body formed at the first connection position and a measurement terminal formed at the second connection position and a second bus bar of the at least two bus bars comprises a main body formed at the first and third connection positions and a measurement terminal formed at the second connection position.

For example, the first bus bar may include first connection portions on both sides, which are connected to electrodes of different battery cells, and a connecting portion, which is between the first connection portions on both sides.

For example, the connecting portion of the first bus bar may include a surface, which faces the battery cell, and a rear surface, which is on the opposite side from the battery cell, wherein the surface of the connecting portion includes the first material layer, and the rear surface of the connecting portion includes the second material layer.

For example, the second bus bar may include a first connection portion, which is connected to an electrode of a first battery cell that forms one end for establishing electrical connections between the plurality of battery cells, and a third connection portion, which is connected to the connecting member.

For example, the first material layer may extend continuously from the single-layer portion toward the multi-layer portion, and the thickness of the first material layer provided in the single-layer portion may be thinner than the thickness of the first material layer provided in the multi-layer portion.

For example, the first material layer may include a first metal and the second material layer may include a second metal, wherein the first metal is different from the second metal. For example, the first material layer may include aluminum, and the second material layer may include copper.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exploded perspective view of a battery pack according to an embodiment;
FIG. 2 is a view showing a connection structure of a first bus bar illustrated in FIG. 1;
FIG. 3A is a cross-sectional view taken along line IIIa-IIIa of FIG. 2;
FIG. 3B is a cross-sectional view taken along line IIIb-IIIb of FIG. 2;
FIG. 4 is a view showing a connection structure of a second bus bar illustrated in FIG. 1;
FIG. 5A is a cross-sectional view taken along line Va-Va of FIG. 4;
FIG. 5B is a cross-sectional view taken along line Vb-Vb of FIG. 4; and
FIG. 6 is a cross-sectional view according to a modified embodiment of the first bus bar illustrated in FIG. 3A.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a battery pack according to an embodiment will be described with reference to the accompanying drawings.

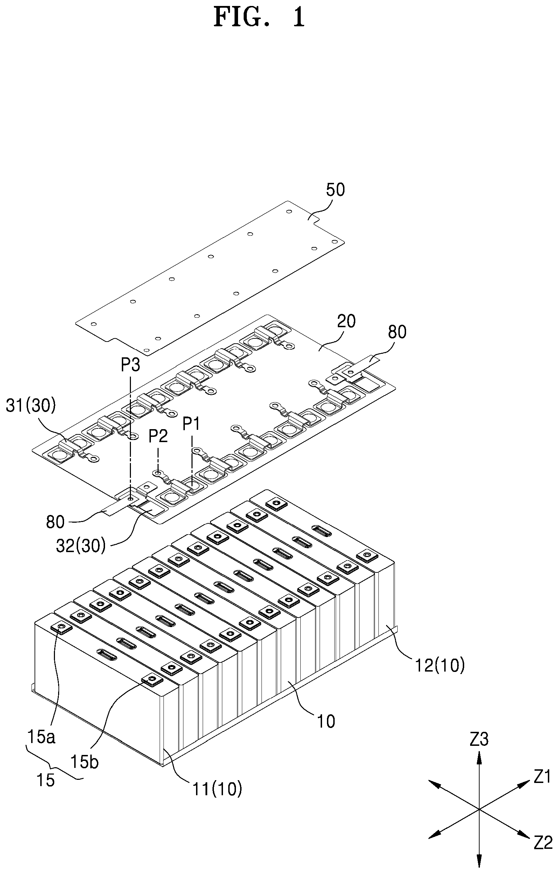

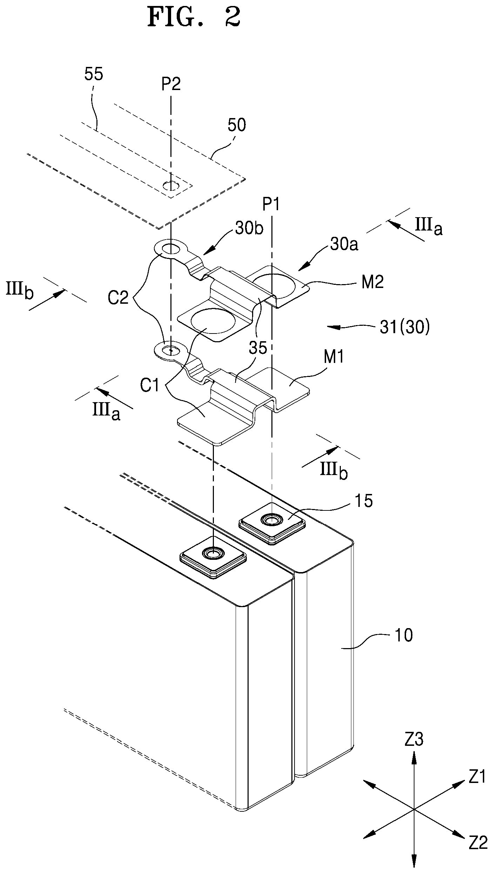

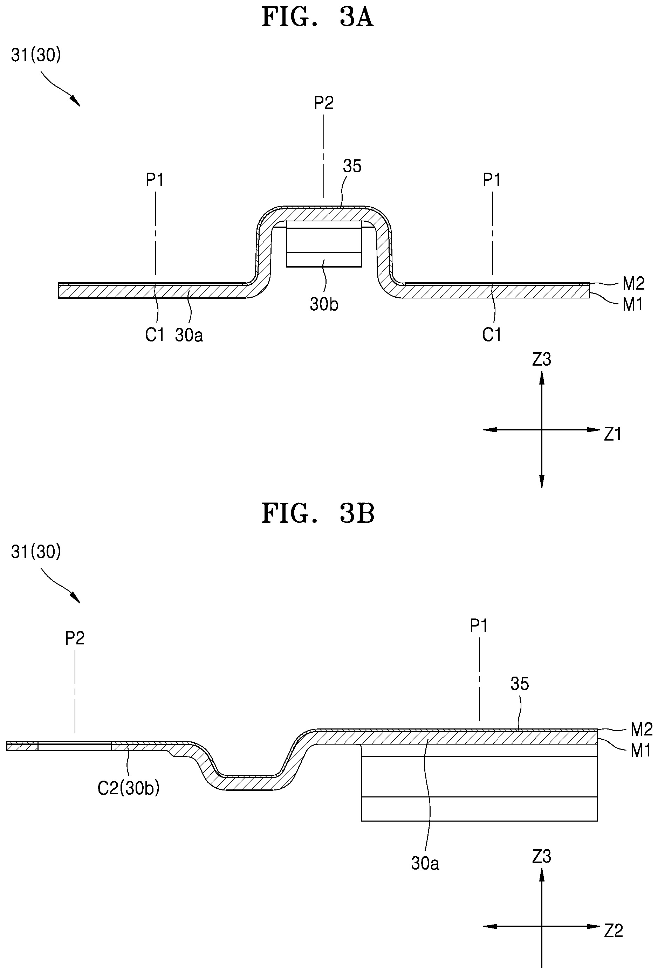

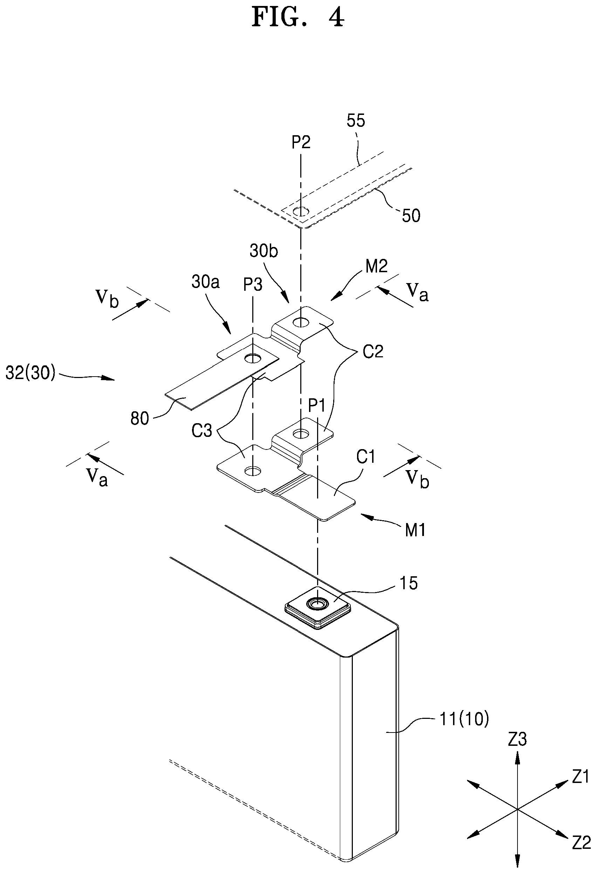

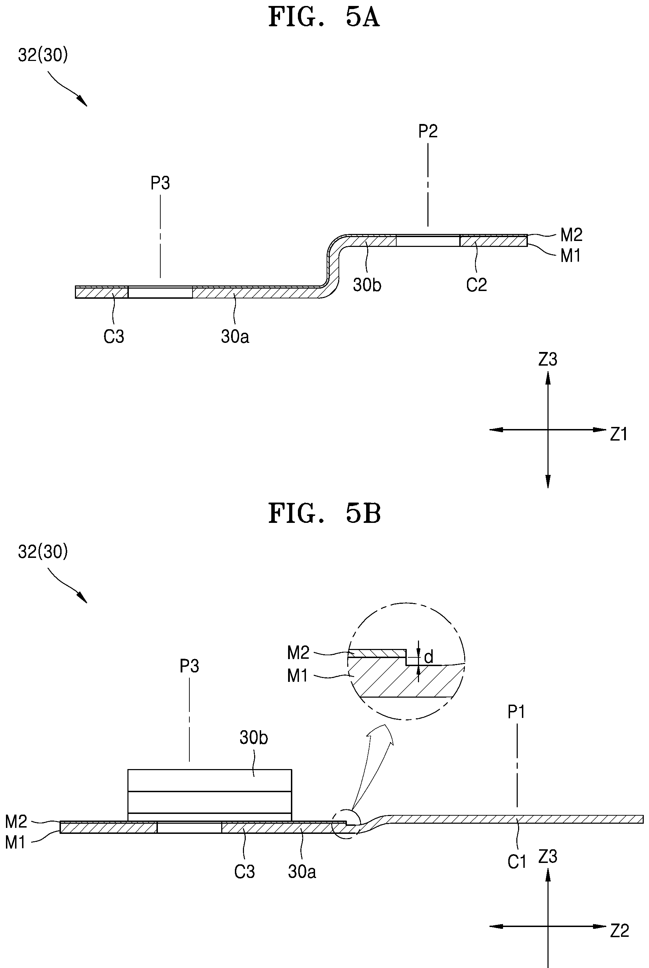

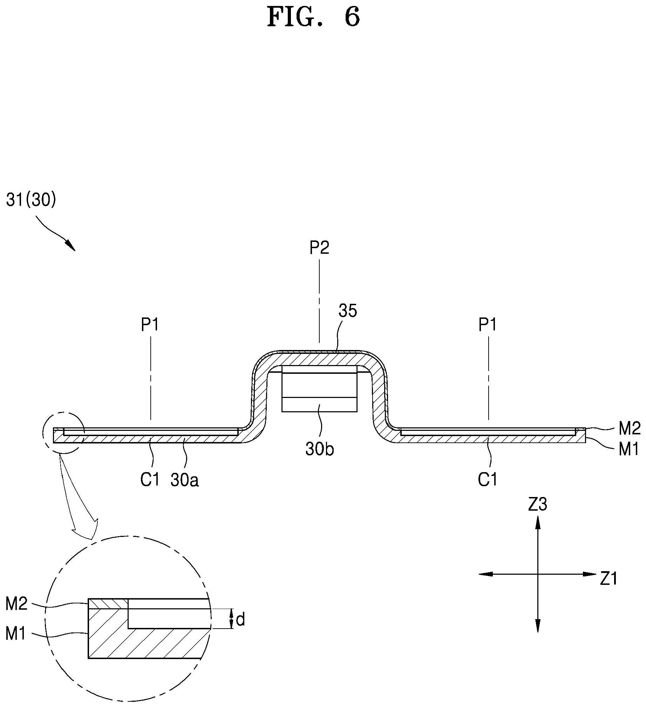

FIG. 1 is an exploded perspective view of a battery pack according to an embodiment. FIG. 2 is a view showing a connection structure of a first bus bar illustrated in FIG. 1. FIG. 3A is a cross-sectional view taken along line Illa-Illa of FIG. 2. FIG. 3B is a cross-sectional view taken along line IIIb-IIIb of FIG. 2. FIG. 4 is a view showing a connection structure of a second bus bar illustrated in FIG. 1. FIG. 5A is a cross-sectional view taken along line Va-Va of FIG. 4. FIG. 5B is a cross-sectional view taken along line Vb-Vb of FIG. 4. FIG. 6 is a cross-sectional view according to a modified embodiment of the first bus bar illustrated in FIG. 3A.

Referring to the drawings, the battery pack according to an embodiment may include a plurality of battery cells 10 arranged in a first direction Z1. Although not illustrated in the drawings, each of the battery cells 10 according to an embodiment may include an electrode assembly and a case for surrounding the electrode assembly. The battery cell 10 may include an electrode 15 that is electrically connected to the electrode assembly and drawn out onto the case. In an embodiment, the electrode assembly may include first and second electrode plates, which are alternately stacked on each other, and separators, which are located between the first and second electrode plates. The electrode assembly may be formed in a roll shape by winding the first and second electrode plates which are alternately stacked with the separators therebetween, or may be formed in a stack shape by alternately stacking the first and second electrode plates with the separators therebetween. The first and second electrode plates of the electrode assembly may be electrically connected to first and second electrodes 15a and 15b formed on the case of the battery cell 10, and the electrode assembly may be charged and discharged through the first and second electrodes 15a and 15b formed on the case of the battery cell 10.

The battery pack according to an embodiment may include the plurality of battery cells 10 arranged in the first direction Z1, and the plurality of battery cells 10 arranged in the first direction Z1 may be electrically connected to each other by bus bars 30. In an embodiment, the battery pack may include the battery cells 10 arranged in a row in the first direction Z1. In various embodiments, in the battery pack, the battery cells 10 arranged in a row in the first direction Z1 may be arranged in two or more rows in a second direction Z2 intersecting with the first direction Z1.

The plurality of battery cells 10 may be electrically connected to each other via the bus bars 30. For example, the bus bar(s) 30 may form a parallel connection while connecting the same electrodes 15 of different battery cells 10 or form a series connection while connecting different electrodes 15 of different battery cells 10. In an embodiment, the battery cells 10 adjacent to each other in the first direction Z1 may be connected to each other via the same electrodes 15 to form a parallel connection, or the battery cells 10 adjacent to each other in the first direction Z1 may be connected to each other via different electrodes 15 to form a series connection. For example, in an embodiment, the plurality of battery cells 10 may be arranged such that the battery cells 10 adjacent to each other in the first direction Z1 have the same left-right orientation in the second direction Z2 intersecting with the first direction Z1, and accordingly, the same electrodes 15 may be connected to each other to form parallel connections. On the other hand, the plurality of battery cells 10 may be arranged such that the battery cells 10 adjacent to each other in the first direction Z1 have the reversed left-right orientation in the second direction Z2 intersecting with the first direction Z1, and accordingly, different electrodes 15 may be connected to each other to form series connections. In various embodiments, the plurality of battery cells 10 arranged in the first direction Z1 may be connected in parallel, series, or a combined series-parallel manner. The number of battery cells 10 forming the battery pack, the number of parallel connections and series connections, etc. may be determined according to the capacity and output required by a set device that uses the battery pack as a power supply source.

Throughout this specification, the first direction Z1 may represent the front-rear direction in which the plurality of battery cells 10 are arranged, and the second direction Z2 may represent the direction intersecting with the first direction Z1, for example, the left-right direction in which the first and second electrodes 15a and 15b are arranged. Also, a third direction Z3 may represent the direction intersecting with the first and second directions Z1 and Z2, for example, the height direction intersecting with the plane on which the primarily of battery cells 10 are arranged.

In an embodiment, the bus bar 30 may be disposed above the battery cell 10 in the third direction Z3. In various embodiments, a bus bar holder 20 may be disposed above the battery cells 10. The plurality of bus bars 30 may be arranged on the bus bar holder 20, and the bus bars 30 may be aligned to the proper positions. For example, the bus bar holder 20 may be located between the battery cells 10 and the bus bars 30 in the third direction Z3 and act as electrical insulation therebetween.

The bus bars 30 may include first bus bars 31, which serve as mediums for electrical connections between the different battery cells 10, and second bus bars 32, which serve as mediums for electrical connections between connecting members 80 and the plurality of battery cells 10 arranged in the first direction Z1 rather than serving as mediums for electrical connections between the different battery cells 10. That is, throughout the specification, the bus bars 30 are not limited to the first bus bars 31 that serve as mediums for electrical connection between the different battery cells 10. The bus bars 30 may inclusively refer to components that are electrically connected to the battery cells 10 to form charging and discharging paths of the battery cells 10. That is, in an embodiment, the bus bars 30 may inclusively refer to components that are electrically connected to the battery cells 10 to establish electrical conduction with the battery cells 10. More specifically, the first bus bars 31 of the bus bars 30 may represent the bus bars 30 which electrically connect the different battery cells 10, and the second bus bars 32 of the bus bars 30 may represent the bus bars 30 which are electrically connected to first and second battery cells 11 and 12 that form two terminals for electrical connections of the battery cells 10 among the electrical connections of the battery cells 10 arranged in the first direction Z1. The second bus bars 32 are electrically connected to the first and second battery cells 11 and 12 to form charging and discharging paths between the first and second battery cells 11 and 12 and the connecting members 80. Throughout the specification, each of the connecting members 80 may represent a member that extends out of the battery cell 10 and may be connected to a battery management system (not shown, BMS) or connected to another battery pack. The connecting members 80 may represent members that connect the first and second battery cells 11 and 12 to the battery management system (not shown) or connect the first and second battery cells 11 and 12 to another battery pack.

The bus bar holder 20 may include a bus bar region, on which the bus bars 30 are located, and a board region, on which a circuit board 50 electrically connected to the bus bars 30 is located.

For example, the bus bar holder 20 may include bus bar regions, which are located on both sides thereof in the second direction Z2 and on which the bus bars 30 are arranged, and a board region, which is located between the bus bar regions on both sides and on which the circuit board 50 is located. The bus bar regions may be regions which are arranged at both side positions in the second direction Z2 and to which the bus bars 30 connected to the first and second electrodes 15a and 15b of the battery cells 10 may be assembled. The bus bar regions may be formed at the edges on both sides of the bus bar holder 20 in the second direction Z2. The board region may be a region which is located at the central position in the second direction Z2 and on which the circuit board 50 connected to the bus bars 30 is located. The board region may be formed at the center of the bus bar holder 20 in the second direction Z2. For example, the board region may be formed at the center between the bus bar regions that are formed at the edges on both sides in the second direction Z2.

In an embodiment, a feature, in which the bus bars 30 are electrically connected to the circuit board 50, may refer to acquiring information about states of the battery cells 10 via the bus bars 30 that are electrically and thermally connected to the battery cells 10. For example, in an embodiment, the circuit board 50 may collect information about the states, such as the temperature, current, and voltage of the battery cell 10 from each of at least some battery cells, in particular of each battery cell, among the plurality of battery cells 10 arranged in the first direction Z1. The battery pack may further include a battery management system (not shown, BMS) which receives the state information collected from the battery cells 10 and controls the charging and discharging operations of the battery cells 10 on the basis of the received state information.

In an embodiment, the electrical connection between the bus bar 30 and the circuit board 50 may be established in a manner in which a measurement terminal 30b formed in the bus bar 30 is directly connected to the circuit board 50 (see Fig. 2). For example, the bus bar 30 and the circuit board 50 may not be connected to each other via a separate connection member (not shown) therebetween. Instead, the electrical connection between the bus bar 30 and the circuit board 50 may be established in a manner in which the measurement terminal 30b integrally formed with the bus bar 30 as a portion of the bus bar 30 is directly connected to the circuit board 50. In an embodiment, all of a first bus bar 31 and a second bus bar 32 may include measurement terminals 30b to be connected to the circuit board 50. For example, the first bus bar 31 and the second bus bar 32 may be directly connected to the circuit board 50 via fastening members (not shown) which are inserted into measurement holes formed at the measurement terminals 30b. For example, each of the fastening members (not shown) may pass through the measurement terminal 30b and the circuit board 50 overlapping with each other above the bus bar holder 20 and then may be fastened into a coupling hole (not shown) of the bus bar holder 20. The measurement terminal 30b may be pressed against and brought into contact with the circuit board 50 by the fastening member (not shown), and the measurement terminal 30b may be electrically connected to the circuit board 50, for example, a pad 55 of the circuit board 50. For example, the contact resistance between the measurement terminal 30b and the pad 55 of the circuit board 50 may cause a measurement error in the state information of the battery cells 10 received via the measurement terminal 30b and may cause, for example, deformation or distortion in the state information of the battery cells 10 received via the measurement terminal 30b. In an embodiment, a homogeneous metal contact between the measurement terminal 30b and the circuit board 50 may be formed to reduce the contact resistance between the measurement terminal 30b and the circuit board 50. As will be described later, the bus bar 30 includes a first material layer M1, which may be formed over the entire bus bar 30 to form a frame of the bus bar 30, and a second material layer M2, which may be formed over a portion of the bus bar 30 on the first material layer M1. The second material layer M2 including the same type of metal as the pad 55 of the circuit board 50 may be formed in the measurement terminal 30b of the bus bar 30.

Hereinafter, the structure of the bus bar 30, which may be employed in an embodiment, will be described. The bus bar 30 described below is to form a charging and discharging path of the battery cell 10, and may include a first bus bar 31 for forming a charging and discharging path between different battery cells 10 and a second bus bar 32 for forming a charging and discharging path between a connecting member 80 and each of first and second battery cells 11 and 12 that form two terminals for electrical connections of the battery cells 10.

The bus bar 30 may include a first material layer M1 forming the frame of the bus bar 30 and a second material layer M2 formed on the first material layer M1. The first material layer M1 may be formed over the entire bus bar 30 to form the frame of the bus bar 30. The second material layer M2 may be formed on the first material layer M1, but partially formed in a selected region of the first material layer M1 rather than being formed on the entire first material layer M1. In an embodiment, the bus bar 30 may include the first material layer M1 and the second material layer M2 formed on the first material layer M1. According to the formation of the first and second material layers M1 and M2, the bus bar 30 may include a single-layer portion including the first material layer M1 and a multi-layer portion including the first and second material layers M1 and M2 stacked on each other. As will be described later, the bus bar 30 may include, according to the positions thereof, a single-layer portion including only the first material layer M1 and a multi-layer portion including a stack of the first and second material layers M1 and M2.

Hereinafter, first to third connection positions P1, P2, and P3 of the bus bar 30 according to an embodiment will be described. The first to third connection positions P1, P2, and P3 of the bus bar 30 may refer to connection positions with the electrode 15 of the battery cell 10, the circuit board 50, and the connecting member 80 which are electrically connected to the bus bar 30. In other words, the bus bar 30 may be connected to the electrode 15 of the battery cell 10 via the first connection position P1, connected to the circuit board 50 via the second connection position P2, and electrically connected to the connecting member 80 via the third connection position P3. Throughout the specification, the connecting member 80 may be a member extending out of the battery cell 10, and may refer to a member that electrically connects the plurality of battery cells 10 forming the battery pack to an external load (or an external charger) or electrically connects the plurality of battery cells 10 forming the battery pack to another battery pack. In an embodiment, the connecting member 80 may extend out of a region, in which the plurality of battery cells 10 are arranged, that is, may extend from the first battery cell 11 toward a position out of the battery cells 10.

The bus bar 30 according to the disclosure includes a single-layer portion and a multi-layer portion which have different numbers of stacks in the thickness direction. The bus bar 30 includes a single-layer portion, which includes a first material layer M1, and a multi-layer portion, which extends continuously from the first material layer M1 of the single-layer portion and includes a second material layer M2 formed on the first material layer M1. The bus bars 30 and different components surrounding the peripheries of the bus bars 30 may form the first to third connection positions P1, P2, and P3. The bus bars 30 may connect different battery cells 10 to each other, connect the battery cells 10 to the circuit board 50, or connect the connecting member 80 to each of the first and second battery cells 11 and 12 that form two terminals for electrical connections of the battery cells 10. Accordingly, each of the bus bars 30 may include at least two of the first to third connection positions P1, P2, and P3 different from each other. For example, the first bus bar 31 for connecting different battery cells 10 to each other may include different first connection positions P1 connected to electrodes 15 of different battery cells 10. The second bus bar 32 for connecting the connecting member 80 to the first battery cell 11 or the second battery cell 12 may include the first connection position P1, which is connected to the electrode 15 of the first battery cell 11 or the electrode 15 of the second battery cell 12, and the third connection position P3, which is connected to the connecting member 80. Here, the first bus bar 31 may include a main body 30a that includes the first connection positions P1 on both sides, and the second bus bar 32 may include a main body 30a that includes the first connection position P1 on one side and the third connection position P3 on the other side. Also, at least one bus bar 30 of the first bus bar 31 and the second bus bar 32 may include a measurement terminal 30b connected to the main body 30a. The first bus bar 31 and/or the second bus bar 32, in which the measurement terminal 30b is formed, may further include the second connection position P2 in addition to the first and third connection positions P1 and P3 as described above. In other words, in an embodiment, the first bus bar 31 may include the main body 30a, which includes the first connection positions P1 on both sides, and the measurement terminal 30b, which extends from the main body 30a and includes the second connection position P2. The second bus bar 32 may include the main body 30a, which includes the first connection position P1 on one side and the third connection position P3 on the other side, and the measurement terminal 30b, which extends from the main body 30a and includes the second connection position P2.

That is, in an embodiment, the first to third connection positions P1, P2, and P3 may refer to the positions for forming connections with peripheral components connected to the bus bars 30 at different positions of the bus bars 30. As the first bus bar 31 including the first connection positions P1 on both sides and the second bus bar 32 including the first connection position P1 on one side and the third connection position P3 on the other side, each of the first and second bus bars 31 and 32 in an embodiment may include two or more different connection positions. For example, the first bus bar 31 includes a first connection position P1 on one side and another first connection position P1 on the other side, that is, may include different two connection positions. As described above, in an embodiment, the first and second bus bars 31 and 32 may include the two different connection positions and further include the second connection position P2 with respect to the circuit board 50. For example, in an embodiment, the first bus bar 31 may include two different first connection positions P1 and the second connection position P2, and thus include a total of three different connection positions. Also, the second bus bar 32 may include the first connection position P1 on one side, the third connection position P3 on the other side, and the second connection position P2, and thus include a total of three different connection positions. That is, in an embodiment, each of the first and second bus bars 31 and 32 may include two different connection positions, and at least one bus bar 30 of the first and second bus bars 31 and 32 may include three connection positions.

As described below, the first material layer M1 or the second material layer M2 may form a surface or a rear surface of the bus bar 30, which are opposite to each other, at any of the first to third connection positions P1, P2, and P3. Also, the first material layer M1 or the second material layer M2 may form a homogeneous metal bond with the battery cell 10, the circuit board 50, and the connecting member 80 which are to be connected to the bus bar 30. That is, the first material layer M1 or the second material layer M2 form the surface or the rear surface of the bus bar 30 at any of the first to third connection positions P1, P2, and P3. Hereinafter, this may represent that when an object to be connected to the bus bar 30 forms a bond to the surface and the rear surface of the bus bar 30, in which the first material layer M1 or the second material layer M2 is formed, at the corresponding connection position, the first material layer M1 or the second material layer M2, which forms the surface or the rear surface of the bus bar 30, and the object to be connected to the bus bar 30 may form the homogeneous metal bond while the same types of metals face each other, that is, the bus bar 30 and the object to be connected to the bus bar 30 may form the homogeneous metal bond while the same types of the first material layers M1 or the second material layers M2 face each other. Throughout the specification, it has been described that the first material layer M1 forms the surface or the rear surface of the bus bar 30. This may represent that the surface or the rear surface of the single-layer portion including the first material layer M1 may be exposed to the outside of the bus bar 30 and form the homogeneous metal bond in conjunction with the electrode 15, including the first material layer M1, of the battery cell 10. For example, in an embodiment, the first material layer M1 and the electrode 15 of the battery cell 10 may include the same type of metal, e.g. aluminum, in particular the same type of aluminum.

Also, throughout the specification, it has been described that the second material layer M2 forms the surface or the rear surface of the bus bar 30. This may represent that the surface or the rear surface of the multi-layer portion including the second material layer M2 is exposed to the outside of the bus bar 30 and may form the homogeneous metal bond in conjunction with the circuit board 50 or the connecting member 80 which includes the second material layer M2. For example, in an embodiment, the second material layer M2, the pad 55 of the circuit board 50, and the connecting member 80 may include the same type of metal, e.g. copper, in particular the same type of copper material.

Hereinafter, when describing the configuration of the first material layer M1 or the second material layer M2 that forms the surface or the rear surface (the connection surface or the rear surface) of the bus bar 30 that is formed at a connection position corresponding to any one of the first to third connection positions P1, P2, and P3, the feature, in which the first material layer M1 forms the surface or the rear surface of the bus bar 30 at the corresponding connection position, may represent that the first material layer M1 is exposed from the second material layer M2 and the first material layer M1 forms the surface or the rear surface of the bus bar 30. Here, the bus bar 30 may include the first material layer M1 at the corresponding connection position and may have a single-layer portion in which the second material layer M2 is not stacked on the first material layer M1. This may represent that the first material layer M1 on the surface or the rear surface of the single-layer portion of the bus bar 30 may be exposed to the outside of the bus bar 30.

Hereinafter, when describing the configuration of the first material layer M1 or the second material layer M2 that forms the surface or the rear surface (the connection surface or the rear surface) of the bus bar 30 that is formed at a connection position corresponding to any one of the first to third connection positions P1, P2, and P3, the feature, in which the second material layer M2 forms the surface or the rear surface of the bus bar 30 at the corresponding connection position, may represent that the second material layer M2 is exposed to the outside of the bus bar 30 and the second material layer M2 forms the surface or the rear surface of the bus bar 30. Here, the bus bar 30 has a multi-layer portion that includes the first material layer M1 and the second material layer M2 stacked on the first material layer M1 at the corresponding connection position. This may represent that the second material layer M2 on the surface or the rear surface of the multi-layer portion of the bus bar 30 may be exposed to the outside of the bus bar 30.

In an embodiment, the bus bar 30 at the first connection position P1 may be provided with a first connection portion C1 that includes a first connection surface (the surface of the first connection portion C1), which faces the electrode 15 of the battery cell 10 to be connected at the first connection position P1, and a first rear surface (the rear surface of the first connection portion C1), which is on the opposite side from the electrode 15 of the battery cell 10. Similarly, the bus bar 30 at the second connection position P2 may be provided with a second connection portion C2 that includes a second connection surface (the surface of the second connection portion C2), which faces the circuit board 50 to be connected at the second connection position P2, and a second rear surface (the rear surface of the second connection portion C2), which is on the opposite side from the circuit board 50. Similarly, the bus bar 30 at the third connection position P3 may be provided with a third connection portion C3 that includes a third connection surface (the surface of the third connection portion C3), which faces the connecting member 80 to be connected at the third connection position P3, and a third rear surface (the rear surface of the third connection portion C3), which is on the opposite side from the connecting member 80.

Hereinafter, there will be described the configurations of the first to third connection surfaces (the surfaces of the first to third connection portions C1, C2, and C3) and the first to third rear surfaces (the rear surfaces of the first to third connection portions C1, C2, and C3) on the opposite sides therefrom, which respectively form the surfaces and the rear surfaces of the first to third connection portions C1, C2, and C3 at the first to third connection positions P1, P2, and P3. That is, there will be described the first material layer M1 or the second material layer M2 which forms the first to third connection surfaces (the surfaces of the first to third connection portions C1, C2, and C3) and the first to third rear surfaces (the rear surfaces of the first to third connection portions C1, C2, and C3) on the opposite sides therefrom. Hereinafter, for the first bus bar 31 for electrically connecting different battery cells 10 and the second bus bar 32 for electrically connecting the connecting member 80 to each of the first and second battery cells 11 and 12 that form two terminals for electrical connections of the battery cells 10, the bus bar 30 may exclusively refer to any one bus bar 30 or inclusively refer to both the first and second bus bars 31 and 32. For example, the bus bar 30 related to the first connection position P1 may refer to the first bus bar 31, the bus bar 30 related to the second connection position P2 may inclusively refer to both the first and second bus bars 31 and 32, and the bus bar 30 related to the third connection position P3 may be refer to the second bus bar 32.

The bus bar 30 may include a first connection portion C1 that includes a first connection surface (the surface of the first connection portion C1), which faces the electrode 15 of the battery cell 10 at the first connection position P1, and a first rear surface (the rear surface of the first connection portion C1), which is on the opposite side from the first connection surface (the surface of the first connection portion C1). The first connection surface (the surface of the first connection portion C1) and the first rear surface (the rear surface of the first connection portion C1) may correspond to the surfaces of the first connection portion C1 exposed to the outside and may correspond to the surfaces of the first connection portion C1 opposite to each other. As will be described later, the first connection surface (the surface of the first connection portion C1) is formed as the first material layer M1, and this may represent that the first material layer M1 is exposed through the first connection surface (the surface of the first connection portion C1) that defines the surface of the first connection portion C1. Also, the first rear surface (the rear surface of the first connection portion C1) is formed as the first material layer M1, and this may represent that the first material layer M1 is exposed through the first rear surface (the rear surface of the first connection portion C1) that defines the rear surface of the first connection portion C1.

The first connection surface (the surface of the first connection portion C1) may include the same type of metal as the electrode 15 of the battery cell 10 so as to form a homogeneous metal bond with the electrode 15 of the battery cell 10. For example, the first connection surface (the surface of the first connection portion C1) may be entirely formed as the first material layer M1. The first rear surface (the rear surface of the first connection portion C1) on the opposite side from the first connection surface (the surface of the first connection portion C1) may be partially formed as the first material layer M1. In an embodiment, the first rear surface (the rear surface of the first connection portion C1) may include a central region, which includes a first material layer M1, and an edge region, which includes a second material layer M2 different from the first material layer M1. The edge region may be formed in a closed loop shape that surrounds the central region. Throughout the specification, the center of the first rear surface (the rear surface of the first connection portion C1) may refer to a position at which the first connection position P1 is projected onto the first rear surface (the rear surface of the first connection portion C1), and the central region of the first rear surface (the rear surface of the first connection portion C1) may refer to a circular region centered on the first connection position P1. In an embodiment, the central region of the first rear surface (the rear surface of the first connection portion C1) may be provided as the surface of the single-layer portion and include the first material layer M1 of the single-layer portion, and the edge region of the first rear surface (the rear surface of the first connection portion C1) may be provided as the surface of the multi-layer portion and include the second material layer M2 of the multi-layer portion.

In an embodiment, both the first connection surface (the surface of the first connection portion C1) and the first rear surface (the rear surface of the first connection portion C1), which are centered on at least the first connection position P1, may include the first material layer M1 and thus form a homogeneous metal bond with the electrode 15 of the battery cell 10 that includes the same type of the first material layer M1. For example, the first material layer M1 and the electrode 15 of the battery cell 10 may include the same type of metal, e.g. aluminum, in particular the same type of aluminum.

That is, the central regions of the first connection surface (the surface of the first connection portion C1) and the first rear surface (the rear surface of the first connection portion C1), which are centered on the first connection position P1, may be provided as opposite surfaces of the single-layer portion that includes the first material layer M1. Accordingly, the first connection surface (the surface of the first connection portion C1) and the first rear surface (the rear surface of the first connection portion C1) may include the first material layers M1.

In an embodiment, the bus bar 30 and the electrode 15 of the battery cell 10 may be coupled to each other through thermal bonding such as welding. More specifically, in the coupling between the bus bar 30 and the electrode 15 of the battery cell 10, welding energy may be input from the first rear surface (the rear surface of the first connection portion C1) of the bus bar 30. According to the input of the welding energy, melting occurs between the first connection surface (the surface of the first connection portion C1) and the electrode 15 of the battery cell 10. A welding region may be formed between the first connection surface (the surface of the first connection portion C1) and the electrode 15 of the battery cell 10. Here, the welding energy is input from the first rear surface (the rear surface of the first connection portion C1). For example, this may represent that the laser welding is performed while laser irradiation is made onto the first rear surface (the rear surface of the first connection portion C1), or the welding current is input from the first rear surface (the rear surface of the first connection portion C1) by a welding rod that is in contact with the first rear surface (the rear surface of the first connection portion C1). Accordingly, by the welding energy input from the first rear surface (the rear surface of the first connection portion C1), the melting may occur between the first connection surface (the surface of the first connection portion C1) on the opposite side from the first rear surface (the rear surface of the first connection portion C1) and the electrodes 15 of the battery cell 10. Therefore, the weld bonding may be formed. In an embodiment, the first rear surface (the rear surface of the first connection portion C1), through which the welding energy is input, the first connection surface (the surface of the first connection portion C1), which is coupled to the electrode 15 of the battery cell 10, may have the same first material layer M1, and thus, strong coupling strength may be obtained through the homogeneous metal bond with the electrode 15 of the battery cell 10. For example, when the second material layer M2 different from the first material layer M1 is formed on the first rear surface (the rear surface of the first connection portion C1) through which the welding energy is input, the second material layer M2, which may be at least partially melted due to the input of the welding energy, and the first material layer M1 are mixed with each other. Accordingly, interfacial coupling having weak coupling strength may be formed on the interface between these materials. That is, in an embodiment, the first connection surface (the surface of the first connection portion C1) and the first rear surface (the central region of the rear surface of the first connection portion C1) of the first connection portion C1 include the first material layers M1 according to the coupling depth, and thus it is possible not to form a coupling portion in which the first and second material layers M1 and M2 different from each other are mixed by welding having a relatively deep coupling depth. As will be described later, in the second connection portion C2 having a relatively shallow coupling depth unlike the first connection portion C1 having a relatively deep coupling depth, it is possible not to form a coupling portion in which the first and second material layers M1 and M2 different from each other are mixed by mechanical fastening or soldering having a relatively shallow coupling depth, even when the first and second material layers M1 and M2 different from each other according to coupling depths are mixed. Therefore, it is possible not to form the coupling portion in which the first and second material layers M1 and M2 different from each other are mixed by mechanical fastening or soldering having a relatively shallow coupling depth, even when the second connection surface (the surface of the second connection portion C2) and the second rear surface (the rear surface of the second connection portion C2) of the second connection portion C2 have the first and second material layers M1 and M2 different from each other according to coupling depths.

In an embodiment, the first connection surface (the surface of the first connection portion C1), which faces the electrode 15 of the battery cell 10, is entirely made of the first material layer M1, and thus, it is possible to form a homogeneous metal bond with the electrode 15 of the battery cell 10 through the first connection surface (the surface of the first connection portion C1). Accordingly, unlike the first connection surface (the surface of the first connection portion C1) that faces the electrode 15 of the battery cell 10, the first rear surface (the rear surface of the first connection portion C1) on the opposite side from the first connection surface (the surface of the first connection portion C1) is not entirely made of the first material layer M1. Instead, the first material layer M1 and the second material layer M2 are formed in the central region and the edge region different from each other. Therefore, through the second material layer M2 formed in the edge region, the second material layers M2 at the first connection position P1 (the second material layer M2 of the first rear surface) and at the second connection position P2 (the second material layer M2 of the second connection surface) are integrally formed with each other and extend. Accordingly, it is possible to enhance the peeling strength between the first and second material layers M1 and M2 and to prevent the second material layer M2 of the bus bar 30 from being peeled off from the first material layer M1.

In an embodiment as described above, at the first connection position P1 between the bus bar 30 and the electrode 15 of the battery cell 10, the first connection surface (the surface of the first connection portion C1) of the bus bar 30, which faces the electrode 15 of the battery cell 10, is entirely made of the first material layer M1, and the first rear surface (the rear surface of the first connection portion C1), which is on the opposite side from the first connection surface (the surface of the first connection portion C1), is made of the first and second material layers M1 and M2. Therefore, it is possible to enhance the coupling strength between the electrode 15 of the battery cell 10 and the bus bar 30 and, at the same time, to improve the peeling strength between the first and second material layers M1 and M2 of the bus bar 30.

In an embodiment, the bus bar 30 may include a second connection portion C2 that includes a second connection surface (the surface of the second connection portion C2), which faces the circuit board 50 at the second connection position P2, and a second rear surface (the rear surface of the second connection portion C2), which is on the opposite side from the second connection surface (the surface of the second connection portion C2). The second connection portion C2 may form a portion of the measurement terminal 30b that protrudes from the main body 30a of the bus bar 30 for coupling with the circuit board 50 and, for example, may form an end of the measurement terminal 30b which faces the circuit board 50. The second connection surface (the surface of the second connection portion C2) and the second rear surface (the rear surface of the second connection portion C2) may correspond to the surfaces of the second connection portion C2 which are opposite to each other and exposed to the outside. As will be described later, the second connection surface (the surface of the second connection portion C2) is formed as the second material layer M2, and this may represent that the second material layer M2 is exposed through the second connection surface (the surface of the second connection portion C2) that defines the surface of the second connection portion C2. Also, the second rear surface (the rear surface of the second connection portion C2) is formed as the first material layer M1, and this may represent that the first material layer M1 is exposed through the second rear surface (the rear surface of the second connection portion C2) that defines the rear surface of the second connection portion C2. In an embodiment, the measurement terminal 30b including the second connection portion C2 may include a multi-layer portion that includes the first and second material layers M1 and M2 stacked on each other. The second material layer M2 and the first material layer M1 may be exposed through the second connection surface (the surface of the second connection portion C2) and the second rear surface (the rear surface of the second connection portion C2), respectively, which correspond to the surface and the rear surface of the multi-layer portion.

In an embodiment, the second connection surface (the surface of the second connection portion C2) and the second rear surface (the rear surface of the second connection portion C2) may include the second material layer M2 and the first material layer M1, respectively, which are different from each other. For example, in an embodiment, the measurement terminal 30b including the second connection portion C2 may have a relatively narrow width (with respect to the main body 30a) and protrude from the main body 30a of the bus bar 30. The measurement terminal 30b protruding while having a relatively narrow width may be entirely made of the multi-layer portion that includes the first and second material layer M1 and M2 and enhance the peeling strength between the first and second material layers M1 and M2. That is, the measurement terminal 30b may include the second connection portion C2 formed at an end thereof and may be entirely made of the multi-layer portion that includes the first and second material layers M1 and M2. Also, the measurement terminal 30b protrudes from the main body 30a of the bus bar 30 while having a relatively narrow width and is entirely made of the multi-layer portion that includes the first and second material layers M1 and M2, and the contact surface between the first and second material layers M1 and M2 is limited, thus making it possible to further enhance the peeling strength between the first and second material layers M1 and M2. In addition, the second material layers M2 at the second connection position P2 (the second material layer M2 of the second connection surface) and the first connection position P1 (the second material layer M2 of the first rear surface) are formed continuously, and thus it is possible to further enhance the peeling strength between the first and second material layers M1 and M2.

The coupling between the second connection portion C2 of the bus bar 30 and the circuit board 50 may be made through mechanical fastening or thermal bonding such as soldering between the second connection portion C2 of the bus bar 30 and the pad 55 of the circuit board 50. That is, in an embodiment, the coupling between the first connection portion C1 of the bus bar 30 and the electrode 15 of the battery cell 10 at the first connection position P1 may be made through thermal bonding, such as the welding that has a relatively deep coupling depth, and the coupling between the second connection portion C2 of the bus bar 30 and the circuit board 50 at the second connection position P2 may be made through the mechanical fastening or thermal bonding such as soldering that has a relatively shallow coupling depth. Throughout the specification, the feature, in which the mechanical fastening between the second connection portion C2 of the bus bar 30 and the circuit board 50 has a shallow coupling depth, may represent that, for example, the second connection portion C2 of the bus bar 30 and the pad 55 of the circuit board 50 are not melted and fused to the extent that the second connection portion C2 of the bus bar 30 and the pad 55 of the circuit board 50 are indistinguishable from each other and thus do not form integrated coupling to each other. Also, the above feature may represent that the depth of coupling depth is shallow, although the second connection portion C2 of the bus bar 30 and the pad 55 of the circuit board 50 are melted and fused by the mechanical fastening force to the extent that the second connection portion C2 of the bus bar 30 and the pad 55 of the circuit board 50 are indistinguishable from each other and thus form integrated coupling to each other.

In various embodiments, in addition to the mechanical fastening, thermal bonding such as soldering may be applied between the second connection portion C2 of the bus bar 30 and the circuit board 50. Here, in the soldering of the second connection portion C2 having a relatively shallower coupling depth than the welding of the first connection portion C1, that is, close to the surface coupling, even when the first and second material layers M1 and M2 are co-existed, a coupling portion, in which the first and second material layers M1 and M2 are mixed, may not be formed. Accordingly, a defect in the coupling may not be caused. For example, in an embodiment, the first connection surface (the surface of the first connection portion C1) and the first rear surface (the central region of the first rear surface), which respectively form the surface and the rear surface of the first connection portion C1, may include the same first material layer M1 at the first connection position P1 having a relatively deep coupling depth. Also, the second connection surface (the surface of the second connection portion C2) and the second rear surface (the rear surface of the second connection portion C2), which respectively form the surface and the rear surface of the second connection portion C2, may include the second material layer M2 and the first material layer M1, which are different from each other, at the second connection position P2 having a relatively shallow coupling depth.

In an embodiment, the second connection position P2 may be formed at both the first and second bus bars 31 and 32, and the second connection portion C2 that forms the connection to the circuit board 50 may include the multi-layer portion including the first and second material layers M1 and M2. In an embodiment, both the measurement terminal 30b of the first bus bar 31 and the measurement terminal 30b of the second bus bar 32 may include the multi-layer portions and may extend from the main body 30a of the first bus bar 31 and the main body 30a of the second bus bar 32, respectively, toward the second connection positions P2 that face the circuit board 50. In a specific embodiment, the measurement terminal 30b of the first bus bar 31 may extend from the main body 30a of the first bus bar 31 while having a relatively narrow width (with respect to the main body 30a), and the measurement terminal 30b of the second bus bar 32 may extend from the main body 30a of the second bus bar 32 while having a relatively wide width. However, all the structures of the measurement terminals 30b of the first and second bus bars 31 and 32 may include the multi-layer portions, each of which includes a stack of the first and second material layers M1 and M2.

In an embodiment, the bus bar 30 may include a third connection portion C3 that includes a third connection surface (the surface of the third connection portion C3), which faces the connecting member 80 at the third connection position P3, and a third rear surface (the rear surface of the third connection portion C3), which is on the opposite side from the third connection surface (the surface of the third connection portion C3). In an embodiment, the connecting member 80 may extend out of the battery cell 10 and form the charging and discharging paths connected to the plurality of battery cells 10 that constitute the battery pack. For example, the connecting member 80 may connect a battery management system (not shown) to each of the first and second battery cells 11 and 12 that form two terminals for electrical connections of the plurality of battery cells 10, or may connect each of the first and second battery cells 10 to another battery pack. Here, in the plurality of battery cells 10 connected to each other in series, the first and second battery cells 11 and 12 may correspond to a battery cell 10 having the highest potential (the highest potential battery cell 10) and a battery cell 10 having the lowest potential (the lowest potential battery cell 10), respectively. In the plurality of battery cells 10 connected to each other in series, the first and second battery cells 11 and 12 may correspond to a battery cell 10 having a relatively high potential and a battery cell 10 having a relatively low potential, respectively. In an embodiment, the third connection position P3 may include a connection position between the connecting member 80 and the bus bar 30 connected to the first battery cell 11 and a connection position between the connecting member 80 and the bus bar 30 connected to the second battery cell 12, and the bus bars 30 may have substantially the same structure at the third connection positions P3. Hereinafter, the third connection position P3 between the connecting member 80 and the bus bar 30 connected to the first battery cell 11 will be mainly described. Also, the third connection position P3 between the connecting member 80 and the bus bar 30 connected to the second battery cell 12 is substantially the same as the third connection position P3 between the connecting member 80 and the bus bar 30 connected to the first battery cell 11, and thus, detailed descriptions thereof will be omitted.

The third connection surface (the surface of the third connection portion C3) may be entirely made of the second material layer M2, and the third rear surface (the rear surface of the third connection portion C3) may be entirely made of the first material layer M1. For example, the third connection portion C3 may include the multi-layer portion that includes the first and second material layers M1 and M2. Here, the third connection surface (the surface of the third connection portion C3) and the third rear surface (the rear surface of the third connection portion C3), which correspond to the surface and the rear surface of the third connection portion C3, may include the second material layer M2 and the first material layer M1, respectively.

The third connection surface (the surface of the third connection portion C3) may be entirely made of the second material layer M2 and thus form the homogeneous metal bond with the connecting member 80 that includes the same type of the second material layer M2. For example, in an embodiment, the second material layer M2 and the connecting member 80 may include the same type of copper material. For example, the coupling between the bus bar 30 and the connecting member 80 may be made through the thermal bonding such as welding. In the coupling between the bus bar 30 and the connecting member 80, welding energy may be input from the surface of the connecting member 80. According to the input of the welding energy, melting occurs between the rear surface of the connecting member 80 and the third connection surface (the surface of the third connection portion C3). A welding region may be formed between the rear surface of the connecting member 80 and the third connection surface (the surface of the third connection portion C3). Here, the welding energy is input from the surface of the connecting member 80. For example, this may represent that the laser welding is performed while laser irradiation is made onto the surface of the connecting member 80, or the welding current is input from the surface of the connecting member 80 by a welding rod that is in contact with the surface of the connecting member 80. Accordingly, by the welding energy input from the surface of the connecting member 80, the melting may occur between the third connection surface (the surface of the third connection portion C3) and the rear surface of the connecting member 80 on the opposite side from the surface of the connecting member 80. Therefore, the weld bonding may be formed. In an embodiment, the third connection surface (the surface of the third connection portion C3), which is in contact with the connecting member 80 through which the welding energy is input, may include the same second material layer M2 as the connecting member 80, and the third rear surface (the rear surface of the third connection portion C3), which is not in contact with the connecting member 80, may include the first material layer M1 different from the connecting member 80. In an embodiment, all of the coupling between the bus bar 30 and the electrode 15 of the battery cell 10 at the first connection position P1 and the coupling between the bus bar 30 and the connecting member 80 at the third connection position P3 may be made through the welding that has a relatively deep coupling depth. Both the first connection surface (the surface of the first connection portion C1) and the first rear surface (the rear surface of the first connection portion C1), which correspond to the first connection position P1, may include the same first material layer M1 as the electrode 15 of the battery cell 10. However, the third connection surface (the surface of the third connection portion C3), which corresponds to the third connection position P3, may include the same second material layer M2 as the connecting member 80, but the third rear surface (the rear surface of the third connection portion C3), which corresponds to the third connection position P3, may include the first material layer M1 different from the connecting member 80. As described above, for the first connection position P1 and the third connection position P3 that form the coupling through the welding having a relatively deep coupling depth, the structures of the first connection surface (the surface of the first connection portion C1) and the first rear surface (the rear surface of the first connection portion C1) at the first connection position P1 are formed differently from the structures of the third connection surface (the surface of the third connection portion C3) and the third rear surface (the rear surface of the third connection portion C3) at the third connection position P3. In the direction in which the welding energy is input, the first rear surface (the rear surface of the first connection portion C1) of the bus bar 30 receives the welding energy earlier than the first connection surface (the surface of the first connection portion C1). On the other hand, in the direction in which the welding energy is input, the third rear surface (the rear surface of the third connection portion C3) of the bus bar 30 receives the welding energy later than the third connection surface (the surface of the third connection portion C3). The first rear surface (the central region of the first rear surface), which receives the welding energy earlier than the first connection surface (the surface of the first connection portion C1) on which the welding is actually made, includes the first material layer M1 in accordance with the first connection surface (the surface of the first connection portion C1) that includes the first material layer M1. The third rear surface (the rear surface of the of the third connection portion C3), which receives the welding energy later than the third connection surface (the surface of the third connection portion C3) on which the welding is actually made, may include the first material layer M1 unlike the third connection surface (the surface of the third connection portion C3) that includes the second material layer M2. In an embodiment, the direction, in which the welding energy is input, is formed such that in a state in which the bus bar 30 and the electrode 15 of the battery cell 10 and the connecting member 80, which are objects to be connected to the bus bar 30, overlap each other, at the first connection position P1 or the third connection position P3, the welding energy may be input from the upper surface of a member formed at a relatively high position. For example, at the first connection position P1, the welding energy may be input from the first rear surface (the rear surface of the first connection portion C1) of the bus bar 30 that is formed on the electrode 15 of the battery cell 10. Also, at the third connection position P3, the welding energy may be input from the surface of the connecting member 80 that is disposed on the third connection surface (the surface of the third connection portion C3) of the bus bar 30. The connecting member 80 is provided after the battery pack is formed. The connecting member 80 is disposed on the bus bar 30 formed in the battery pack, and then the bus bar 30 and the connecting member 80 are connected to each other. Therefore, the welding energy may be input from the surface of the connecting member 80 disposed on the bus bar 30.

In an embodiment, the third connection surface (the surface of the third connection portion C3) may be entirely made of the second material layer M2, and the third rear surface (the rear surface of the third connection portion C3) may be entirely made of the first material layer M1. At the third connection position P3, the third rear surface (the rear surface of the third connection position P3) may be entirely made of the first material layer M1. On the other hand, at the first connection position P1, the first rear surface (the rear surface of the first connection portion C1) may be formed in a state in which the first material layer M1 and the second material layer M2 are partially co-existed with each other (the central region and the edge region of the first rear surface). In other words, a portion (the central region) of the first rear surface (the rear surface of the first connection portion C1) includes the first material layer M1 at the first connection position P1, and another portion (an edge region) of the first rear surface (the rear surface of the first connection portion C1) includes the second material layer M2. The second material layers M2 at both the first connection position P1 (the second material layer M2 of the first rear surface) and the second connection position P2 (the second material layer M2 of the second connection surface) are continuously connected to each other, and thus, it is possible to enhance the peeling strength of the second material layer M2 formed on the first material layer M1.

At the third connection position P3 unlike the first connection position P1, the third rear surface (the rear surface of the third connection portion C3) may be entirely made of the first material layer M1. Even though the third rear surface (the rear surface of the third connection portion C3) is entirely made of the first material layer M1, the second material layers M2 at both the second connection position P2 (the second material layer M2 of the second connection surface) and the third connection position P3 (the second material layer M2 of the third connection surface) are continuously connected to each other. Accordingly, it is possible to enhance the peeling strength between the first and second material layers M1 and M2, and it is also possible to enhance the peeling strength of the second material layer M2 formed on the first material layer M1. For example, at the first connection position P1, the first connection surface (the surface of the first connection portion C1) does not include the second material layer M2, but the first rear surface (the rear surface of the first connection portion C1) includes the second material layer M2. Therefore, the second material layers M2 at the first connection position P1 and the second connection position P2 may be continuously connected to each other. At the third connection position P3, the third rear surface (the rear surface of the third connection portion C3) does not include the second material layer M2, but the third connection surface (the surface of the third connection portion C3) includes the second material layer M2. Therefore, the second material layers M2 at the third connection position P3 and the second connection position P2 may be continuously connected to each other. The different second material layers M2 at the first to third connection positions P1, P2, and P3 are continuously connected as described above, and thus, it is possible to prevent peeling-off of the second material layer M2 which is formed at the second connection position P2, that is, at the measurement terminal 30b that protrudes from the main body 30a of the bus bar 30.

In other words, in an embodiment, the second bus bar 32 including the third connection position P3 may include a main body 30a of the bus bar 30, which has one side including the first connection position P1 and the other side including the third connection position P3, and a measurement terminal 30b of the bus bar 30, which includes the second connection position P2. Here, the measurement terminal 30b of the second bus bar 32 may protrude from the other side of the main body 30a that includes the third connection position P3. Here, the other side of the main body 30a, which is connected to the connecting member 80 at the third connection position P3 in the main body 30a of the second bus bar 32, and the measurement terminal 30b, which protrudes from the other side of the main body 30a and is connected to the circuit board 50 at the second connection position P2, may include a multi-layer portion that includes a stack of the first and second material layers M1 and M2, and thus may include the second material layer M2 on the surface of the multi-layer portion and the first material layer M1 on the rear surface of the multi-layer portion. Also, the second material layer M2, which is formed at the second and third connection positions P2 and P3, may continuously extend.

The first and second bus bars 31 and 32 may have a substantially similar shape, and each of the first and second bus bars 31 and 32 may include, for example, the surface and the rear surface including any one material layer of the first and second material layers M1 and M2 according to the first to third connection positions P1, P2, and P3 with respect to different objects to be connected thereto. However, at the first connection positions P1 of the first and second bus bars 31 and 32 connected to the electrode 15 of the battery cell 10, the first rear surface (the rear surface of the first connection portion C1) formed at the first connection position P1 of the first bus bar 31 includes the central region including the first material layer M1 and the edge region including the second material layer M2. However, the first rear surface (the rear surface of the first connection portion C1) formed at the first connection position P1 of the second bus bar 32 may be entirely made of the first material layer M1. In an embodiment, the first and second material layers M1 and M2 may be formed differently on the first rear surfaces (the rear surfaces of the first connection portions P1) of the first and second bus bars 31 and 32, in consideration of the peeling strength of the first and second material layers M1 and M2. That is, the second material layer M2, which is continuous to the second connection position P2 via the second material layer M2 of the edge region, may be formed on the first rear surface (the rear surface of the first connection portion C1) of the first bus bar 31. Although the second material layer M2 is not formed on the first rear surface (the rear surface of the first connection portion C1) of the second bus bar 32, the second material layer M2, which is continuous to the second connection position P2 via the second material layer M2 formed on the third connection surface (the surface of the third connection portion C3), may be formed. Therefore, unlike the first rear surface (the rear surface of the first connection portion C1) of the first bus bar 31, the first rear surface (the rear surface of the first connection portion C1) of the second bus bar 32 may not have the second material layer M2.

In an embodiment, the first and second bus bars 31 and 32 may have a substantially similar shape. For example, both the first and second bus bars 31 and 32 may include the first connection position P1 connected to the electrode 15 of the battery and the second connection position P2 connected to the circuit board 50. In an embodiment, the first bus bar 31 may include the first connection positions P1 which are connected to the electrodes 15 of the battery cells 10 on both sides. The second bus bar 32 may include the first connection position P1, which is connected to the electrode 15 of the battery cell 10 on one side, and the third connection position P3, which is connected to the connecting member 80 on the other side. In an embodiment, the first bus bar 31 may include the first connection portions C1 formed at the first connection positions P1 on both sides and further include a connecting portion 35 formed between the first connection portions C1 on both sides. The connecting portion 35 may connect the first connection portions C1 on both sides between the first connection portions C1 on both sides, which are connected to the electrodes 15 of different battery cells 10 and may have, for example, a shape bending in a direction opposite to the battery cells 10 so as to align the positions of the first connection portions C1 on both sides. For example, in an embodiment, the position of the first bus bar 31 may be aligned by the connecting portion 35 of the first bus bar 31, for example, by matching the connecting portion 35 of the first bus bar 31 to the bus bar holder 20. Also, it is possible to secure position alignment between the first connection portions C1, which are formed on both sides of the first bus bar 31, and the electrodes 15 of the battery cells 10. In an embodiment, the first connection portions C1, which are formed on both sides of the first bus bar 31, and the connecting portion 35, which is formed between the first connection portions C1, may constitute the main body 30a of the first bus bar 31. Also, the first bus bar 31 may further include the measurement terminal 30b that protrudes from the main body 30a and extends toward the second connection position P2.

In an embodiment, the connecting portion 35 may include the multi-layer portion of the first bus bar 31 together with the edge regions of the first connection portions C1. That is, the connecting portion 35 may include a stack of the first and second material layers M1 and M2 and may include, for example, the surface facing the battery cell 10 and the rear surface on the opposite side from the battery cell 10. The surface of the connecting portion 35 may include the first material layer M1, and the rear surface of the connecting portion 35 may include the second material layer M2.

The first and second bus bars 31 and 32 may have a substantially similar structure as described above, but may include measurement terminals 30b having different structures at the second connection positions P2. The measurement terminals 30b protrude from the main bodies 30a of the first and second bus bars 31 and 32 and are connected to the circuit board 50. For example, the measurement terminal 30b of the first bus bar 31 may have a shape which is bent a plurality of times, e.g. at least twice, in particular at least four times, particularly preferred twelve times or more, in the third direction Z3, corresponding to the height direction, while having a relatively narrow width. Unlike the measurement terminal 30b of the first bus bar 31, the measurement terminal 30b of the second bus bar 32 may have a simple bent shape which is bent just one time in the third direction Z3, corresponding to the height direction, while having a relatively large width. As described above, the measurement terminals 30b of the first and second bus bars 31 and 32, which establish connections with the circuit board 50 at the second connection positions P2, have shapes different from each other. In particular, the measurement terminal 30b of the first bus bar 31 has a shape which is bent a plurality of times in the third direction Z3, corresponding to the height direction, while having a relatively narrow width, and thus, the measurement terminal 30b of the first bus bar 31 may elastically support the circuit board 50.

For example, the circuit board 50 may be elastically supported, above the bus bar holder 20, by the plurality of measurement terminals 30b of the first bus bars 31 which are arranged along the long sides of the circuit board 50. For example, in order to elastically support the circuit board 50, the measurement terminal 30b of the first bus bar 31 has a relatively narrow width, and at the same time, the measurement terminal 30b has a shape bent a plurality of times. Therefore, the measurement terminal 30b of the first bus bar 31 may prop up and support the circuit board 50, and thus, the circuit board 50 may be elastically supported. That is, by the measurement terminal 30b of the first bus bar 31, the circuit board 50 may be elastically supported while floating above the bus bar holder 20.

The measurement terminals 30b of the second bus bars 32 may prop up and support the circuit board 50 at both ends in the longitudinal direction of the circuit board 50. However, the circuit board 50 may be relatively weakly supported by the measurement terminals 30b of the second bus bars 32 because sufficiently supported by the measurement terminals 30b of the first bus bars 31. Accordingly, the measurement terminal 30b of the second bus bar 32 may have a relatively larger width than the measurement terminal 30b of the first bus bar 31. Also, even if these measurement terminals 30b have the bent shapes for elastic support, there may be a difference in the number of bending. For example, all the measurement terminals 30b of the first and second bus bars 31 and 32 may prop up and support the circuit board 50. However, the measurement terminal 30b of the first bus bar 31 may support the circuit board 50 relatively elastically, but the measurement terminal 30b of the second bus bar 32 may support the circuit board 50 relatively rigidly.

In an embodiment, the bus bar 30 may include a first material layer M1, which is formed over the entire bus bar 30 to form a frame of the bus bar 30, and a second material layer M2, which is formed in a selective region on the first material layer M1. The bus bar 30 may include a single-layer portion, which includes the first material layer M1, and a multi-layer portion, which includes the first and second material layers M1 and M2 stacked on each other. The single-layer portion and the multi-layer portion may be continuously connected to each other by the first material layer M1 that continuously extends. The first material layer M1 may provide a common support base in the single-layer portion and the multi-layer portion. In an embodiment, the single-layer portion of the bus bar 30 may be formed in the central region of the first connection portion C1, and the multi-layer portion of the bus bar 30 may be formed in an edge region of the first connection portion C1.

Hereinafter, a stepped structure of a first material layer M1 will be described with reference to FIGS. 5B and 6. In an embodiment, the bus bar 30 may include a single-layer portion, which includes a first material layer M1, and a multi-layer portion, which includes a stack of first and second material layers M1 and M2. The first material layer M1 of the single-layer portion and the first material layer M1 of the multi-layer portion may be continuously connected to each other and may have a stepped structure in which a stepped portion d is formed in the thickness direction.

In the formation of the bus bar 30 according to an embodiment, the first and second material layers M1 and M2 stacked on each other may be coupled through a rolling process, and the second material layer M2 in some regions is selectively removed from the first and second material layers M1 and M2 stacked on each other. Therefore, it is possible to form the bus bar 30 which includes the single-layer portion at a first connection position P1 and the multi-layer portion at second and third connection positions P2 and P3 according to positions. Here, when the second material layer M2 is removed from the first and second material layers M1 and M2 stacked on each other, the mechanical removal such as grinding or cutting or the chemical removal such as etching may be used. Also, when a portion of the first material layer M1 is removed together with the removal of the second material layer M2, a stepped portion d of the first material layer M1, which has thicknesses varying along the thickness direction, may be formed. That is, the first material layers M1 in the single-layer portion and the multi-layer portion of the bus bar 30 are continuously formed, and may have the varying thicknesses, such as a first thickness of the single-layer portion, which is relatively thin, and a second thickness of the multi-layer portion, which is relatively thick. In other words, the first thickness at the central region of the first connection portion C1, which includes the single-layer portion of the bus bar 30, may be thinner, in particular at least 10 percent thinner, preferably at least 25 percent thinner, particularly preferred 50 percent or more thinner, than the second thickness at the edge region of the first connection portion C1, which includes the multi-layer portion of the bus bar 30. In another embodiment, the single-layer portion and the multi-layer portion may have the same thickness of the first material layer M1.

In an embodiment, the single-layer portion of the bus bar 30 may be formed in the central region of the first connection portion C1, and the multi-layer portion of the bus bar 30 may be formed in the second and third connection portions C2 and C3 and an edge region of the first connection portion C1. In an embodiment, the first material layer M1 of the single-layer portion may have the first thickness having a relatively thin thickness, and the first material layer M1 of the multi-layer portion may have the second thickness having a relatively thick thickness. This may represent that a stepped portion d is formed, in the thickness direction, in the first material layer M1 which continuously extends along the edge region of the first connection portion C1 having the multi-layer portion and the central region of the first connection portion C1 having the single-layer portion, and may represent that a stepped portion d is formed, in the thickness direction, in the first material layer M1 which continuously extends along the third connection portion C3 having the multi-layer portion and the first connection portion C1 having the single-layer portion.

The battery pack according to the disclosure may include the bus bar which has the improved structure to ensure durability of the bus bar while forming the strong homogeneous metal bond with the object to be connected. Therefore, according to the disclosure, the resistance between different battery cells electrically connected by the bus bars and the resistance in the input and output lines of the plurality of electrically connected battery cells are reduced, and thus, it is possible to enhance the overall output of the battery pack. The distortion and deformation in the state information received via the bus bars may be prevented by reducing the resistance of transfer lines for the state information, and thus, it is possible to check the exact state of the battery cells. Also, it is possible to suppress the peeling-off between different material layers in the bus bars that include stacks of the different material layers.

The disclosure has been described with reference to the embodiments illustrated in the drawings, but the embodiments are merely illustrative. Therefore, it will be understood by a person skilled in the art that various modifications and equivalent other embodiments are possible from the disclosure. Therefore, the real protective scope of the disclosure shall be determined by the technical ideas of the accompanying the claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A battery pack comprising a plurality of battery cells (10) and a bus bar (30) electrically connected to the plurality of battery cells (10),
wherein the bus bar (30) comprises a single-layer portion and a multi-layer portion which have different numbers of stacks in the thickness direction, wherein the single-layer portion comprises a first material layer (M1), and the multi-layer portion comprises a first material layer (M1) continuously connected from the first material layer (M1) of the single-layer portion and a second material layer (M2) formed on at least one of a surface or a rear surface of the first material layer (M1),
**characterized in that**
the bus bar (30) is configured such that the single-layer portion is arranged on a first connection position (P1) to electrically connect an electrode (15) of each of the battery cells (10) and the multi-layer portion is arranged on a second connection position (P2) to electrically connect a circuit board (50) on the electrode (15) of the battery cell (10) and/or a third connection position (P3) to electrically connect a connecting member (80) extending out of the battery cell (10).

2. The battery pack of claim 1,
wherein a first connection portion (C1) of the bus bar (30), which faces the electrode (15) of the battery cell (10) at the first connection position (P1), has a first connection surface, which faces the electrode (15) of the battery cell (10), and a first rear surface, which is on the opposite side from the electrode (15) of the battery cell (10),
wherein each of the first connection surface and the first rear surface comprises the first material layer (M1).

3. The battery pack of claim 2, wherein the first connection surface is entirely made of the first material layer (M1), and the first rear surface is partially made of the first material layer (M1).

4. The battery pack of claim 3,
wherein a central region of the first rear surface, which corresponds to the first connection position (P1), comprises the first material layer (M1), and
an edge region of the first rear surface, which surrounds the central region, comprises the second material layer (M2).

5. The battery pack of any one of claims 1 to 4,
wherein a second connection portion (C2) of the bus bar (30), which faces the circuit board (50) at the second connection position (P2), has a second connection surface, which faces the circuit board (50), and a second rear surface, which is on the opposite side from the circuit board (50),
wherein the second connection surface comprises the second material layer (M2), and the second rear surface comprises the first material layer (M1).

6. The battery pack of any one of claims 1 to 5,
wherein a third connection portion (C3) of the bus bar (30), which faces the connecting member (80) at the third connection position (P3), has a third connection surface, which faces the connecting member (80), and a third rear surface, which is on the opposite side from the connecting member (80),
wherein the third connection surface comprises the second material layer (M2), and the third rear surface comprises the first material layer (M1).

7. The battery pack of claim 6, wherein the third connection surface is entirely made of the second material layer (M2), and the third rear surface is entirely made of the first material layer (M1).

8. The battery pack of any one of claims 1 to 7, wherein the first connection position (P1) and the third connection position (P3) are formed in a main body (30a) of the bus bar (30), and the second connection position (P2) is formed in an end of a measurement terminal (30b) that protrudes from the main body (30a) of the bus bar (30) to face the circuit board (50).

9. The battery pack of claim 8, wherein the measurement terminal (30b) comprises the multi-layer portion in which the second material layer (M2) is formed on the first material layer (M1).

10. The battery pack of any one of claims 1 to 9, comprising at least two bus bars (30), wherein:
a first bus bar (31) of the at least two bus bars (30) comprises a main body (30a) formed at the first connection position (P1) and a measurement terminal (30b) formed at the second connection position (P2); and
a second bus bar (32) of the at least two bus bars (30) comprises a main body (30a) formed at the first and third connection positions (P1, P3) and a measurement terminal (30b) formed at the second connection position (P2).

11. The battery pack of claim 10, wherein the first bus bar (31) comprises first connection portions (C1) on both sides, which are connected to electrodes (15) of different battery cells (10), and a connecting portion, which is between the first connection portions (C1) on both sides and/or
wherein the second bus bar (32) comprises a first connection portion (C1), which is connected to an electrode (15) of a first battery cell (11) that forms one end for establishing electrical connections between the plurality of battery cells (10), and a third connection portion (C3), which is connected to the connecting member (80).

12. The battery pack of claim 11,
wherein the connecting portion of the first bus bar (31) comprises a surface, which faces the battery cell (10), and a rear surface, which is on the opposite side from the battery cell (10),
wherein the surface of the connecting portion comprises the first material layer (M1), and the rear surface of the connecting portion comprises the second material layer (M2).

13. The battery pack of any one of the preceding claims, wherein the first material layer (M1) extends continuously from the single-layer portion toward the multi-layer portion, and the thickness of the first material layer (M1) provided in the single-layer portion is thinner than the thickness of the first material layer (M1) provided in the multi-layer portion.

## Patentansprüche

1. Batteriepack, umfassend eine Mehrzahl von Batteriezellen (10) und eine Stromschiene (30), die elektrisch mit der Mehrzahl von Batteriezellen (10) verbunden ist,
wobei die Stromschiene (30) einen einlagigen Abschnitt und einen mehrlagigen Abschnitt umfasst, die eine unterschiedliche Anzahl von Stapeln in der Dickenrichtung aufweisen, wobei der einlagige Abschnitt eine erste Materialschicht (M1) umfasst und der mehrlagige Abschnitt eine erste Materialschicht (M1) umfasst, die von der ersten Materialschicht (M1) des einlagigen Abschnitts aus durchgängig verbunden ist, und eine zweite Materialschicht (M2), die auf mindestens einer aus einer Fläche oder einer rückseitigen Fläche der ersten Materialschicht (M1) ausgebildet ist,
**dadurch gekennzeichnet, dass**
die Stromschiene (30) derart ausgestaltet ist, dass der einlagige Abschnitt an einer ersten Verbindungsposition (P1) angeordnet ist, um eine Elektrode (15) von jeder der Batteriezellen (10) elektrisch zu verbinden, und der mehrlagige Abschnitt an einer zweiten Verbindungsposition (P2) angeordnet ist, um eine Platine (50) an der Elektrode (15) der Batteriezelle (10) elektrisch zu verbinden und/oder einer dritten Verbindungsposition (P3), um ein Verbindungselement (80), das sich aus der Batteriezelle (10) hinaus erstreckt, elektrisch zu verbinden.

2. Batteriepack nach Anspruch 1,
wobei ein erster Verbindungsabschnitt (C1) der Stromschiene (30), der der Elektrode (15) der Batteriezelle (10) an der ersten Verbindungsposition (P1) zugewandt ist, eine erste Verbindungsfläche, die der Elektrode (15) der Batteriezelle (10) zugewandt ist, und eine erste rückseitige Fläche, die sich auf der gegenüberliegenden Seite zur Elektrode (15) der Batteriezelle (10) befindet, aufweist,
wobei sowohl die erste Verbindungsfläche als auch die erste rückseitige Fläche die erste Materialschicht (M1) umfasst.

3. Batteriepack nach Anspruch 2, wobei die erste Verbindungsfläche vollständig aus der ersten Materialschicht (M1) gefertigt ist und die erste rückseitige Fläche teilweise aus der ersten Materialschicht (M1) gefertigt ist.

4. Batteriepack nach Anspruch 3,
wobei ein mittiger Bereich der ersten rückseitigen Fläche, der der ersten Verbindungsposition (P1) entspricht, die erste Materialschicht (M1) umfasst, und
ein Randbereich der ersten rückseitigen Fläche, die den mittigen Bereich umgibt, die zweite Materialschicht (M2) umfasst.

5. Batteriepack nach einem der Ansprüche 1 bis 4,
wobei ein zweiter Verbindungsabschnitt (C2) der Stromschiene (30), der der Platine (50) an der zweiten Verbindungsposition (P2) zugewandt ist, eine zweite Verbindungsfläche, die der Platine (50) zugewandt ist, und eine zweite rückseitige Fläche, die sich auf der gegenüberliegenden Seite zur Platine (50) befindet, aufweist,
wobei die zweite Verbindungsfläche die zweite Materialschicht (M2) umfasst und die zweite rückseitige Fläche die erste Materialschicht (M1) umfasst.

6. Batteriepack nach einem der Ansprüche 1 bis 5,
wobei ein dritter Verbindungsabschnitt (C3) der Stromschiene (30), der dem Verbindungselement (80) an der dritten Verbindungsposition (P3) zugewandt ist, eine dritte Verbindungsfläche aufweist, die dem Verbindungselement (80) zugewandt ist, und eine dritte rückseitige Fläche, die sich auf der gegenüberliegenden Seite zum Verbindungselement (80) befindet,
wobei die dritte Verbindungsfläche die zweite Materialschicht (M2) umfasst und die dritte rückseitige Fläche die erste Materialschicht (M1) umfasst.

7. Batteriepack nach Anspruch 6, wobei die dritte Verbindungsfläche vollständig aus der zweiten Materialschicht (M2) gefertigt ist und die dritte rückseitige Fläche vollständig aus der ersten Materialschicht (M1) gefertigt ist.

8. Batteriepack nach einem der Ansprüche 1 bis 7, wobei die erste Verbindungsposition (P1) und die dritte Verbindungsposition (P3) in einem Hauptteil (30a) der Stromschiene (30) ausgebildet sind, und die zweite Verbindungsposition (P2) in einem Ende eines Messanschlusses (30b) ausgebildet ist, der aus dem Hauptteil (30a) der Stromschiene (30) ragt, um der Platine (50) zugewandt zu sein.

9. Batteriepack nach Anspruch 8, wobei der Messanschluss (30b) den mehrlagigen Abschnitt umfasst, in dem die zweite Materialschicht (M2) auf der ersten Materialschicht (M1) ausgebildet ist.

10. Batteriepack nach einem der Ansprüche 1 bis 9, das mindestens zwei Stromschienen (30) umfasst, wobei:
eine erste Stromschiene (31) von den mindestens zwei Stromschienen (30) einen Hauptteil (30a), der an der ersten Verbindungsposition (P1) ausgebildet ist, und einen Messanschluss (30b), der an der zweiten Verbindungsposition (P2) ausgebildet ist, umfasst; und
eine zweite Stromschiene (32) von den mindestens zwei Stromschienen (30) einen Hauptteil (30a), der an der ersten und dritten Verbindungsposition (P1, P3) ausgebildet ist, und einen Messanschluss (30b), der an der zweiten Verbindungsposition (P2) ausgebildet ist, umfasst.

11. Batteriepack nach Anspruch 10, wobei die erste Stromschiene (31) erste Verbindungsabschnitte (C1) auf beiden Seiten, die mit Elektroden (15) verschiedener Batteriezellen (10) verbunden sind, und einen Verbindungsabschnitt, der zwischen den ersten Verbindungsabschnitten (C1) auf beiden Seiten liegt, umfasst, und/oder wobei die zweite Stromschiene (32) einen ersten Verbindungsabschnitt (C1) umfasst, der mit einer Elektrode (15) einer ersten Batteriezelle (11) verbunden ist, die ein Ende zum Herstellen einer elektrischen Verbindung zwischen der Mehrzahl von Batteriezellen (10) ausbildet, und einen dritten Verbindungsabschnitt (C3), der mit dem Verbindungselement (80) verbunden ist.

12. Batteriepack nach Anspruch 11,
wobei der Verbindungsabschnitt der ersten Stromschiene (31) eine Fläche, die der Batteriezelle (10) zugewandt ist, und eine rückseitige Fläche, die sich auf der gegenüberliegenden Seite zur Batteriezelle (10) befindet, umfasst,
wobei die Fläche des Verbindungsabschnitts die erste Materialschicht (M1) umfasst und die rückseitige Fläche des Verbindungsabschnitts die zweite Materialschicht (M2) umfasst.

13. Batteriepack nach einem der vorhergehenden Ansprüche, wobei sich die erste Materialschicht (M1) vom einlagigen Abschnitt aus zum mehrlagigen Abschnitt durchgängig erstreckt und die Dicke der ersten Materialschicht (M1), die im einlagigen Abschnitt vorgesehen ist, dünner ist als die Dicke der ersten Materialschicht (M1), die im mehrlagigen Abschnitt vorgesehen ist.

## Revendications

1. Bloc-batterie comprenant une pluralité de cellules de batterie (10) et une barre omnibus (30) connectée électriquement à la pluralité de cellules de batterie (10),
dans lequel la barre omnibus (30) comprend une partie monocouche et une partie multicouche qui ont des nombres différents d'empilements dans la direction d'épaisseur, dans lequel la partie monocouche comprend une première couche de matériau (M1), et la partie multicouche comprend une première couche de matériau (M1) connectée en continu à partir de la première couche de matériau (M1) de la partie monocouche et une deuxième couche de matériau (M2) formée sur au moins une parmi une surface ou une surface arrière de la première couche de matériau (M1),
**caractérisé en ce que**
la barre omnibus (30) est configurée de sorte que la partie monocouche soit agencée sur une première position de connexion (P1) pour connecter électriquement une électrode (15) de chacune des cellules de batterie (10) et que la partie multicouche soit agencée sur une deuxième position de connexion (P2) pour connecter électriquement une carte de circuit imprimé (50) sur l'électrode (15) de la cellule de batterie (10) et/ou une troisième position de connexion (P3) pour connecter électriquement un organe de connexion (80) s'étendant hors de la cellule de batterie (10).

2. Bloc-batterie selon la revendication 1,
dans lequel une première partie de connexion (C1) de la barre omnibus (30), qui fait face à l'électrode (15) de la cellule de batterie (10) au niveau de la première position de connexion (P1), présente une première surface de connexion, qui fait face à l'électrode (15) de la cellule de batterie (10), et une première surface arrière, qui est du côté opposé à l'électrode (15) de la cellule de batterie (10),
dans lequel chacune de la première surface de connexion et de la première surface arrière comprend la première couche de matériau (M1).

3. Bloc-batterie selon la revendication 2, dans lequel la première surface de connexion est entièrement constituée de la première couche de matériau (M1), et la première surface arrière est partiellement constituée de la première couche de matériau (M1).

4. Bloc-batterie selon la revendication 3,
dans lequel une région centrale de la première surface arrière, qui correspond à la première position de connexion (P1), comprend la première couche de matériau (M1), et
une région de bord de la première surface arrière, qui entoure la région centrale, comprend la deuxième couche de matériau (M2).

5. Bloc-batterie selon l'une quelconque des revendications 1 à 4,
dans lequel une deuxième partie de connexion (C2) de la barre omnibus (30), qui fait face à la carte de circuit imprimé (50) au niveau de la deuxième position de connexion (P2), présente une deuxième surface de connexion, qui fait face à la carte de circuit imprimé (50), et une deuxième surface arrière, qui est du côté opposé à la carte de circuit imprimé (50),
dans lequel la deuxième surface de connexion comprend la deuxième couche de matériau (M2), et la deuxième surface arrière comprend la première couche de matériau (M1).

6. Bloc-batterie selon l'une quelconque des revendications 1 à 5,
dans lequel une troisième partie de connexion (C3) de la barre omnibus (30), qui fait face à l'organe de connexion (80) au niveau de la troisième position de connexion (P3), présente une troisième surface de connexion, qui fait face à l'organe de connexion (80), et une troisième surface arrière, qui est du côté opposé à l'organe de connexion (80),
dans lequel la troisième surface de connexion comprend la deuxième couche de matériau (M2), et la troisième surface arrière comprend la première couche de matériau (M1).

7. Bloc-batterie selon la revendication 6, dans lequel la troisième surface de connexion est entièrement constituée de la deuxième couche de matériau (M2), et la troisième surface arrière est entièrement constituée de la première couche de matériau (M1).

8. Bloc-batterie selon l'une quelconque des revendications 1 à 7, dans lequel la première position de connexion (P1) et la troisième position de connexion (P3) sont formées dans un corps principal (30a) de la barre omnibus (30), et la deuxième position de connexion (P2) est formée dans une extrémité d'une borne de mesure (30b) qui fait saillie à partir du corps principal (30a) de la barre omnibus (30) pour faire face à la carte de circuit imprimé (50).

9. Bloc-batterie selon la revendication 8, dans lequel la borne de mesure (30b) comprend la partie multicouche dans laquelle la deuxième couche de matériau (M2) est formée sur la première couche de matériau (M1).

10. Bloc-batterie selon l'une quelconque des revendications 1 à 9, comprenant au moins deux barres omnibus (30), dans lequel :
une première barre omnibus (31) des au moins deux barres omnibus (30) comprend un corps principal (30a) formé au niveau de la première position de connexion (P1) et une borne de mesure (30b) formée au niveau de la deuxième position de connexion (P2) ; et
une deuxième barre omnibus (32) des au moins deux barres omnibus (30) comprend un corps principal (30a) formé au niveau des première et troisième positions de connexion (P1, P3) et une borne de mesure (30b) formée au niveau de la deuxième position de connexion (P2).

11. Bloc-batterie selon la revendication 10, dans lequel la première barre omnibus (31) comprend de premières parties de connexion (C1) des deux côtés, qui sont connectées à des électrodes (15) de différentes cellules de batterie (10), et une partie de connexion, qui se trouve entre les premières parties de connexion (C1) des deux côtés et/ou
dans lequel la deuxième barre omnibus (32) comprend une première partie de connexion (C1), qui est connectée à une électrode (15) d'une première cellule de batterie (11) qui forme une extrémité pour établir des connexions électriques entre la pluralité de cellules de batterie (10), et une troisième partie de connexion (C3), qui est connectée à l'organe de connexion (80).

12. Bloc-batterie selon la revendication 11,
dans lequel la partie de connexion de la première barre omnibus (31) comprend une surface, qui fait face à la cellule de batterie (10), et une surface arrière, qui est du côté opposé à la cellule de batterie (10),
dans lequel la surface de la partie de connexion comprend la première couche de matériau (M1), et la surface arrière de la partie de connexion comprend la deuxième couche de matériau (M2).

13. Bloc-batterie selon l'une quelconque des revendications précédentes, dans lequel la première couche de matériau (M1) s'étend en continu depuis la partie monocouche vers la partie multicouche, et l'épaisseur de la première couche de matériau (M1) disposée dans la partie monocouche est plus mince que l'épaisseur de la première couche de matériau (M1) disposée dans la partie multicouche.
